# EUROPÄISCHE PATENTANMELDUNG

(11) **EP 1 350 768 A1**
(43) Veröffentlichungstag der Anmeldung: **08.10.2003**
(21) Anmeldenummer: 02007812.7
(22) Anmeldetag: 06.04.2002
(51) Int. Cl.: C02F 5/12, C23F 11/00

(54) **Mittel gegen Ausscheidungen und Korrosion von Prozesswässern**

(71) Anmelder: FABORGA S.A., 1211 Genève 6 (CH)
(72) Erfinder: Graf, Anton, 1205 Genève (CH); Frahne, Dietrich, Dr., 72664 Kohlburg (DE)
(74) Vertreter: Mohnhaupt, Dietrich

(57) **Zusammenfassung**

Ein Mittel gegen Kesselstein-Ablagerungen und Korrosion, verursacht durch Prozesswässer zur Dampferzeugung, zum Heizen und Kühlen enthält eine Polycarbonsäure und ein Fettpolyamin. Die Polycarbonsäurekomponente besteht überwiegend oder ausschliesslich aus einer Polyasparaginsäure mit einer Molmasse von 1500 bis 3000 oder einem ihrer Salze. Das Mittel liegt bevorzugt als wässrige Zubereitung vor und kann einen Lösungsvermittler zwischen Polyasparaginsäure und Fettpolyamin enthalten. Weiterhin sind ein Verfahren zur Inhibierung von Kesselstein-Ablagerungen und Korrosion mit Hilfe des neuen Mittels und eine Verwendung der Polyasparaginsäure beschrieben und beansprucht.

Die neuen Mittel zeichnen sich durch bessere Wirkeigenschaften und höhere Stabilität im Vergleich zu bekannten Mitteln aus.

## Beschreibung

Die vorliegende Erfindung betrifft ein Mittel gegen das Auftreten von Ausscheidungen aus Prozesswässern und gegen das Verursachen von Korrosion durch diese Prozesswässer, insbesondere gegen Korrosion von Metallen. Die Erfindung betrifft weiterhin ein Verfahren zur Inhibierung von Kesselsteinablagerungen und von korrosiven Angriffen auf metallische Apparateteile in Anlagen zur Dampferzeugung und in Brauchwasserkreisläufen durch Zusatz mindestens eines Inhibitormittels zum Speisewasser bzw. Kreislaufwasser. Schliesslich bezieht sich die. Erfindung auf eine neue Verwendung bekannter Polycarbonsäuren.

Insbesondere betrifft die Erfindung Mittel zur Verhinderung der Ausscheidung von Kesselstein, kesselsteinähnlichen Ablagerungen und anderen Abscheidungen sowie von korrosiven Angriffen in Anlagen, in denen Prozesswasser (Brauchwasser) verwendet und/oder im Kreislauf geführt wird, welches zur Ausfällung neigende Stoffe, insbesondere Mineralsalze, und in der Regel auch noch gelöste Luftbestandteile enthält. Der Kürze halber werden diese Mittel im folgenden als "Inhibitormittel" bezeichnet.

Als Prozesswässer sollen demnach solche wässrigen Systeme verstanden werden, die in Anlagen eingespeist oder/und im Kreislauf geführt werden, in denen sie als Wärmeträger dienen, z.B. zum Heizen oder Kühlen, sowie solche Wässer, die zwecks Dampferzeugung in Kesselanlagen als Speisewasser verwendet werden oder zum reinigenden Auskochen neuer oder stillgelegter Anlagen dienen.

Prozesswässer zum Betreiben von Dampferzeugungs-Anlagen, Dampf- und Warmwasser-Heizungssystemen sowie Kühlwasserkreisläufen enthalten meistens bestimmte Salze von Erdalkalimetallen, die zunächst in gelöster Form vorliegen, beispielsweise als Hydrogencarbonate, aber beim Erwärmen, bei fortschreitender Aufkonzentrierung durch verdampfendes Wasser oder auch nur durch mechanische Einwirkungen in Pumpen, Drosseln usw. schliesslich in unlöslicher Form ausfallen. Dies führt zu Krustenbildung an Rohr- und Gefässwandungen von Wärmeübertragungsanlagen, wodurch der Wärmeübergang beeinträchtigt wird und bei Dampferzeugungsanlagen die Gefahr besteht, dass örtliche Überhitzungen mit nachfolgendem Bersten der Apparate eintreten. Ausserdem führen Ablagerungen, insbesondere bei hohen Temperaturen und Drücken, zusammen mit dem bekanntermassen im Wasser vorhandenen Sauerstoff zu einer Korrosion der Apparate, insbesondere zu Lochfrass.

Auch Kühlwasserkreisläufe sind der Gefahr anderweitig schädlicher Ausfällungen und anderer Ausscheidungen ausgesetzt.

Die Betreiber solcher Anlagen sehen sich daher aus wirtschaftlichen Gründen dazu veranlasst, die Prozesswässer entsprechend vorzubehandeln, derart, dass Ausfällungen vermieden werden, die Korrosionsgefahren auf ein Minimum vermindert werden und um das so behandelte Wasser möglichst lange im Kreislauf zu behalten.

Eine Möglichkeit einer Vorbehandlung wäre die vollständige Entfernung der Mineralsalze aus dem Wasser. Die vollkommene Entsalzung des Wassers stellt einen wirtschaftlich nicht immer vertretbaren Aufwand dar. Ausserdem ist seit langem bekannt, dass salzfreies, d.h. entmineralisiertes Wasser gegenüber Eisen und Eisenlegierungen und auch gegenüber Buntmetallen korrodierend wirkt; man weiss, dass Mineralsalze im Prozesswasser die Rohre und Gefässe mit einer dünnen, sehr dichten Schicht einer Ausscheidung überziehen, die das darunterliegende Metall vor Korrosion schützt. Schliesslich ist auch nicht auszuschliessen, dass ein zuvor einmal sorgfältig gereinigtes Wasser im Prozess durch Leckagen wieder Salze aufnimmt und dadurch verunreinigt wird.

Aus den genannten Gründen ist heute bekanntermassen ein Zusatz von Additiven zu den hier angesprochenen Prozesswässern unverzichtbar.

Zu den überaus zahlreichen in der Literatur bereits vorgeschlagenen Wasserzusätzen gehören auch Zusammensetzungen zum Inhibieren einer Krustenbildung und sogar der Ausfällung, wobei sehr unterschiedliche Substanzen genannt werden: Fettalkylpolyamine gemäss FR-A-1'435'023; polymere Derivate von hydrolysiertem Maleinsäureanhydrid, Mischungen aus Derivaten von Polymaleinsäureanhydrid und Polyacryl- sowie Polymethacrylsäure und deren Salze gemäss FR-A-2'116'139 und 2'223'308; Acrylsäurepolymere, die in Form der Säure oder von Salzen im Handel erhältlich sind; Polymere und/oder Copolymere der Acryl- und Methacrylsäure und deren Salze mit ausgesuchtem Molekulargewicht gemäss FR-A-2'514'746; oder auch Terpolymere von Acrylsäure, Methacrylsäure und Itaconsäure sowie deren Salze gemäss FR-A-2'544'722. Von den meisten Zusätzen dieser Art wird verlangt, dass sie, wenn sie Ausfällungen nicht ganz vermeiden (was in der Regel nicht möglich ist), die entstehenden Ausfällungen in Schwebe halten, so dass sich diese an einer dafür vorgesehenen Ausschlämmungsstelle der Anlage als Schlamm absetzen und von Zeit zu Zeit abgelassen werden können; manchmal wird den Zusätzen auch die Wirkung zugeschrieben, dass sich bildende Ablagerungen möglichst voluminös und nicht fest anhaftend sind.

In der EP-B1-0'184'558 ist ein Verfahren zur Verhinderung von Kesselstein angegeben, bei welchem dem zu behandelnden Wasser ein synergistisch wirkendes Gemisch aus Salzen von Polymeren ethylenisch ungesättigter Carbonsäuren, ausgewählt aus Polymaleaten, Polyacrylaten, Polymethacrylaten, Maleat-(Meth)Acrylat-Copolymeren, Acrylat-Methacrylat-Itaconat-Terpolymeren und Mischungen derselben, und bestimmten, nachstehend definierten aliphatischen Polyaminen zugegeben wird.

Alle bekannten Inhibitormittel haben die gemeinsamen und grundsätzlichen Nachteile, dass erstens der Zusatz von Additiven zu Prozesswasser kostenaufwendig ist und dass Nebenwirkungen nicht auszuschliessen sind, sei es durch das zugesetzte Mittel selbst oder durch seine eventuell auftretenden Reaktions- oder Abbauprodukte. Zweitens sind einige der bisher bekannten Inhibitormittel nur begrenzt lagerstabil. Dies trifft beispielsweise auch auf Inhibitormittel auf der Basis von Polycarbonsäuren zu und auch auf manche, die in der EP-B1-0'184'558 beschrieben und beansprucht sind. Dabei handelt es sich in letzterem Falle darum, dass die betreffenden Inhibitormittel im Laufe der Lagerzeit nichts an ihrer Wirksamkeit verlieren, sich aber zuweilen in zwei Schichten nach Art des Aufrahmens trennen; es ist dann nötig, die Inhibitormittel vor Entnahme von Anteilen wieder zu homogenisieren. Solche Phasentrennungen treten meist dann auf, wenn die Art und Menge zumindest der genannten zwei Hauptbestandteile nicht optimal aufeinander abgestimmt sind bzw. es im Hinblick auf die verlangten Wirkungen nicht möglich ist, eine solche Abstimmung vorzunehmen.

Als dritter Nachteil ist zu nennen, dass die Inhibitormittel gemäss EP-B1-0'184'558, welche einen durchschlagenden Erfolg erzielt haben und sich insbesondere in der Speisewasserbehandlung von Dampfkesseln vor vielen anderen Inhibitormitteln durchgesetzt haben, im Hinblick auf die stark gestiegenen Anforderungen an Speisewasser wegen der erschwerten Bedingungen im Dampfkessel (Druck und Temperatur) nicht in allen Fällen die gewünschte Langzeitwirkung aufweisen. Es wurde durch Versuche gefunden, dass die verwendeten Polycarbonsäuren bei sehr hohen Temperaturen im Wasser und im allgemeinen in zusätzlicher Gegenwart von Sauerstoff hydrolytisch-oxydativ vom Ende her abgebaut werden, wobei wasserdampfflüchtige organische Säuren mit korrosiver Wirkung gebildet werden. Einerseits geht dabei die kesselsteinverhütende Wirkung schneller als gewünscht zurück, und andererseits sind die durch Hydrolyse und Oxydation entstehenden sauren niedermolekularen Verbindungen relativ stark korrosiv, so dass die gleichzeitig anwesenden, für den Korrosionsschutz verantwortlichen Fettpolyamine deaktiviert oder sogar verbraucht werden. Überdies ist ganz allgemein eine Senkung des pH des Kesselwassers nicht erwünscht.

Die Anmelderin hat bereits vorgeschlagen, den erstgenannten Nachteil dadurch auszuschalten, dass dem wässrigen Gemisch aus Polycarbonsäuresalz und Fettpolyamin eine hydrotrope Substanz zugegeben wird, siehe EP-A1-0'677'485. Diese hydrotrope Substanz, beispielsweise Cumolsulfonsäure und ihre Salze, erzeugt eine stabile, homogene Mischung der beiden anderen Komponenten, die über Jahre hinaus lager- und anwendungsstabil ist. Nachteilig an der Verwendung von Arylsulfonaten als hydrotroper Substanz ist die Anwesenheit von Schwefel, obwohl Vergleichsversuche keine höhere Korrosion der Prozesswässer, welche diese neuartigen Inhibitormittel enthielten, ergeben haben.

Die Erfindung hat sich nun zur Aufgabe gestellt, die oben geschilderten Nachteile der bisher bekannten Inhibitormittel gegen Kesselstein und Korrosion in Prozesswässern, vor allem aber im Speisewasser für Dampfkessel, weitgehend oder ganz auszuschalten. Diese Aufgabe, die wie oben beschrieben mehrere Aspekte hat bzw. sich aus mehreren einander zum Teil entgegengesetzten Teilaufgaben zusammensetzt, wird nun vom Inhibitormittel gemäss Patentanspruch 1 gelöst, und das Inhibitormittel ist dadurch gekennzeichnet, dass seine Polycarbonsäurekomponente mindestens zum überwiegenden Teil, bevorzugt aber ausschliesslich, aus einer Polyasparaginsäure ("PASP") oder deren Salzen besteht. Besondere oder bevorzugte Ausführungsformen des Inhibitormittels bilden den Gegenstand abhängiger Ansprüche.

Polyasparaginsäuren sind Polymere der Asparaginsäure der Formel 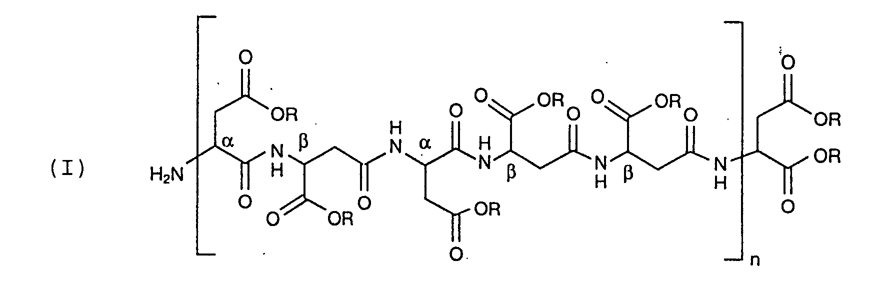 worin R für Wasserstoff, Na⁺ oder NH₄ steht und n einen solchen Wert aufweist, dass die Verbindung eine Molmasse zwischen 1500 und 3000 aufweist (Broschüre "PASP Na-Salz" der Bayer AG, D-51368 Leverkusen, Deutschland, Nr. CH 201201, 03/1999). Polyasparaginsäure ist in grossen Mengen durch thermische Kondensation von Asparaginsäure (dl-Aminobernsteinsäure, HOOC-CH₂-CH(NH₂)-COOH) in fester Phase, katalytische Polymerisation der Asparaginsäure oder Reaktion von Maleinsäure oder Maleinsäureanhydrid mit Ammoniak oder Ammoniumcarbonat usw. zugänglich (Wolfgang Hater u. Mitarb., Power Plant Chemistry 2000, 2(12), S. 752-755). Sie ist strukturell der Polyacrylsäure insofern ähnlich, dass formell die Methylengruppen des Grundgerüstes durch die Peptidgruppe -CO-NH- ersetzt sind:

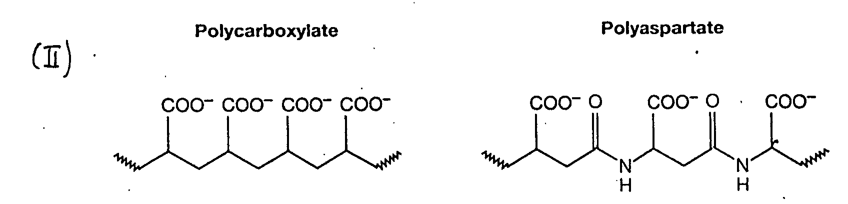

Bisher ist PASP als biologisch abbaubares Dispergiermittel, beispielsweise als Cobuilder in Waschmitteln, vorgeschlagen worden. Was das Bindevermögen von Calciumionen betrifft, so ist es gemäss Fachliteratur demjenigen von Polyacrylaten unterlegen (Nachr. Chem. Tech. Lab. 44(1996), S. 1167-70).

Auf Grund der Strukturformel der PASP als Polypeptid musste der Fachmann vermuten, dass PASP den strengen hydrolytisch-oxidativen Bedingungen im Dampfkessel nicht standhalten würde; diese Bedingungen liegen weit über den höchstens 100°C, welche die Verbindung auszuhalten hat, wenn sie in Waschmitteln eingesetzt wird. Es war also zu erwarten, dass eine Aufspaltung der Polymerkette des Polypeptids unter den Bedingungen des Dampfkesselbetriebs eintreten würde. Gemäss vorliegender Erfindung wurde nun aber überraschenderweise gefunden, dass dies nicht der Fall ist, sondern dass sogar im Gegenteil der mit PASP erreichbare Antiscaling-Effekt gegen Oxidation und Hydrolyse stabiler zu sein scheint als die bisher in analogen Inhibitormitteln verwendete PAC (Polyacrylsäure) und deren Copolymerisate. Überdies wurde beobachtet, dass die langsame, partielle Hydrolyse der PASP anscheinend lediglich die Aminogruppen der endständigen Asparaginsäurereste abspaltet, während die Kette nicht aufgespalten wird, wahrscheinlich weil sich die α- und β-Carboxylgruppen der Peptidbindungen und diese selbst gegenseitig stabilisieren. Es wurde beobachtet, dass eine 10 gew.-%ige wässrige Lösung nach 7tägiger Erhitzung auf 200°C etwa 4,25% Ammoniak abspaltet (wobei zu berücksichtigen ist, dass derartig hohe Konzentrationen bei der Verwendung im Rahmen der Erfindung überhaupt nicht vorkommen). Eine Abspaltung von Ammoniak ist bei der erfindungsgemässen Verwendung nun aber überhaupt nicht störend, im Sinne eines Korrosionsschutzes ja eher erwünscht, ganz im Gegenteil zu den sauren Abspaltungs- und Zersetzungsprodukten der PAC und ihrer Copolymere.

Weiterhin wurde überraschenderweise gefunden, dass Gemische aus PASP-Salzen in wässriger Lösung und Fettpolyaminen bedeutend lagerstabiler sind als solche gemäss der oben erwähnten EP-B1-0'184'558. Dies bedeutet, dass bei der Herstellung der Inhibitormittel auf die oben erwähnte Zugabe einer hydrotropen Substanz verzichtet werden kann und die Menge der bisher verwendeten Lösungsvermittler, zu denen insbesondere Cyclohexylamin gehört, zumindest reduziert, wenn nicht ganz annulliert werden kann. Cyclohexylamin ist keine unbedenkliche Substanz, da sie Dichtungen angreift und von der Herstellung her noch kleine Mengen des krebserzeugenden Benzols enthält. In vielen Fällen kann anstelle von Cyclohexylamin in den erfindungsgemässen Inhibitormitteln ein ungiftiges Niederalkylamin oder Niederalkanolamin verwendet werden, z.B. kann man das physiologisch und technisch unbedenkliche Monoethanolamin, Diethanolamin oder 2-Aminopropanol verwenden. Schliesslich sind PASP auch als Aminsalze erhältlich, und wässrige Lösungen solcher Salze benötigen in aller Regel nur noch geringere Mengen oder unter bestimmten Bedingungen sogar keinen Lösungsvermittler bei der Kombination mit Fettpolyaminen. Es ist noch anzumerken, dass nach weitere Erfindung gereinigte Fettpolyamine verwendet werden, wodurch die Stabilität der wässrigen Mischungen mit PASP weiter verbessert wird. Selbstredend kann in den erfindungsgemässen Inhibitormitteln auch eine freie PASP eingesetzt werden.

Die in den erfindungsgemässen Inhibitormitteln zu verwendenden Fettpolyamine sind in der Regel die gleichen, die auch in den Mitteln gemäss EP-A1-0'065'609 vorhanden sind, nämlich Verbindungen der Formel

(III) R-[NH-(CH₂)ₘ-]ₙ-NH₂

worin R für einen aliphatischen Rest mit 12 bis 18 C-Atomen, m für eine ganze Zahl von 2 bis 8, bevorzugt für 3, und n für eine ganze Zahl von 1 bis 6 steht. Als Verbindung bevorzugt ist Oleylaminopropylamin.

In den neuen Inhibitormitteln werden im allgemeinen die Mengenverhältnisse der Bestandteile dem jeweiligen Verwendungszweck angepasst. Allen Inhibitormitteln gleich ist die Anwesenheit von mindestens einer PASP bzw. deren Salzen und mindestens einem Fettpolyamin der oben definierten Art. In aller Regel ist die Menge an Fettpolyamin geringer als die der PASP. Dabei liegt das Gewichtsverhältnis von Fettpolyamin zu PASP, als 100%ige Substanz gerechnet, im Bereich von 1:1 bis 1:15, vorzugsweise von 1:2 bis 1:7,5. Meist liegt das Inhibitormittel als wässrige Zusammensetzung vor, die keine weiteren organischen Lösungsmittel enthält. Für Sonderanwendungen können solche Lösungsmittel, beispielsweise Niederalkanole, Niederalkylketone, niedere Ester, Ether usw., vorhanden sein, wobei wasserlösliche bzw. -mischbare Verbindungen bevorzugt werden. Weitere mögliche Zusätze im Inhibitormittel sind andere löslichkeitsvermittelnde Substanzen wie Cumolsulfonsäure oder deren Salze, Dispergiermittel, Tenside, Konservierungsmittel, Farbstoffe, Sauerstoffabfangmittel wie Hydroxylamin und dessen Derivate usw.

Zur Herstellung vermischt man im allgemeinen die Bestandteile mit Hilfe einer wirksamen Mischvorrichtung, beispielsweise eines Turbinenmischers. Mit Vorteil geht man so vor, dass man die wässrige PASP bzw. das wässrige Gemisch aus Polyacrylsäure oder deren Copolymer und PASP im Gemisch mit einem Dispergiermittel, falls ein solches verwendet wird, vorlegt und das Fettpolyamin unter Turbinieren einlaufen lässt. Dabei entsteht entweder schon gleich eine klare, wässrige Mischung oder aber zunächst eine Emulsion, in welche man dann das lösungsvermittelnde Amin bzw. Amingemisch einturbiniert, bis die klare Lösung erreicht ist. Die Menge an Aminzusatz wird dabei zuvor durch einen einfachen Versuch bestimmt. Es ist auch möglich, das oder die lösungsvermittelnde(n) Amin(e) vorher mit dem Fettpolyamin zu vermischen. Die übrigen, gegebenenfalls gewünschten Zusätze sowie die berechnete Wassermenge zum Auffüllen werden im allgemeinen am Schluss beigefügt.

Der Vollständigkeit halber sei noch erwähnt, dass die in diesem Dokument erwähnten lösungsverbessernden Zusätze, falls vorhanden, nur in den Inhibitormitteln als solchen benötigt werden und nach dem Einspeisen des Inhibitormittels in das Prozesswasser keine Wirkung mehr entfalten, da ihre Menge dafür ganz unzureichend wäre.

Es sollen nun als Beispiel die Zusammensetzungen einiger erfindungsgemässer Inhibitormittel angegeben werden.

### I. Mittel für Zusatz zu Kesselspeisewasser

Diese Mittel sind für einen Zusatz zum Speisewasser von Hochleistungs-Dampfkesseln ohne Zwangsdurchlauf ausgelegt. Die Abkürzungen im Tabellenkopf werden weiter unten definiert. Alle Mengen beziehen sich auf das Gewicht und auf ein Auffüllen der Mischung mit Wasser auf 100 Gewichtsteile.

| | Mono | Cyclo | F-amin | PAC | PASP | Cum-s |
|---|---|---|---|---|---|---|
| allgemein | 2-10 | 0-10 | 1-7 | 0-5 | 1-20 | 0-7 |
| Beispiel 1 | 5 | 5 | 2 | 2 | 3 | 0 |
| Beispiel 2 | 5 | 0 | 1,5 | 0 | 5 | 5 |

### II. Mittel für Zusatz zu Auskochwasser für neue Kessel

Diese Mittel werden dem Wasser zugesetzt, mit dem bei Betriebstemperatur neue, revidierte oder länger ausser Betrieb gewesene Dampfkessel zwecks Passivierung und Schutz der Metallteile ausgekocht werden. Die Abkürzungen im Tabellenkopf werden weiter unten definiert. Alle Mengen beziehen sich auf das Gewicht und auf ein Auffüllen der Mischung mit Wasser auf 100 Gewichtsteile.

| | Mono | Cyclo | F-amin | PASP | Cum-s | BioD |
|---|---|---|---|---|---|---|
| allgemein | 2-10 | 0-10 | 1-7 | 1-20 | 0-7 | 0-10 |
| Beispiel 3 | 5 | 5 | 1,5 | 5 | 0 | 5 |
| Beispiel 4 | 8 | 0 1,5 | | 5 | 2 | 5 |

### III. Mittel für Zusatz zu Kreislauf-Kühlwasser

Diese Mittel sind für einen Zusatz zum Kühlwasser ausgelegt, welches im Kreislauf durch den Dampfkondensator und Kühleinrichtungen wie Kühltürme geführt wird. Die Abkürzungen im Tabellenkopf werden weiter unten definiert. Alle Mengen beziehen sich auf das Gewicht und auf ein Auffüllen der Mischung mit Wasser auf 100 Gewichtsteile.

| | Mono | Cyclo | F-amin | PASP | Kons. | BioD |
|---|---|---|---|---|---|---|
| allgemein | 2-10 | 0-10 | 1-7 | 1-20 | 0-5 | 0-10 |
| Beispiel 5 | 5 | 0 | 2 | 10 | 2 | 7 |
| Beispiel 6 | 5 | 5 | 2 | 10 | 2 | 0 |

Die Abkürzungen im Kopf der Tabelle bedeuten:

| | |
|---|---|
| Mono | Monoethanolamin |
| Cyclo | Cyclohexylamin |
| F-amin | Fettpolyamin (Oleylaminopropylamin) |
| PASP | Polyasparaginsäure, Na-Salz, 50 Gew.-% in Wasser |
| PAC | Polyacrylsäure, Na-Salz, 50 Gew.-% in Wasser |
| Cum-s | Cumolsulfonsäure, Na-Salz |
| Kons. | Konservierungsmittel |
| BioD | Biodispergator (ethoxyliertes Fettamin, z.B. Kokosfettamin 10 EO oder "AKYPO RO 50 VG) |

Wie aus einem Vergleich der obigen Beispiele hervorgeht, ist es überraschenderweise ohne weiteres möglich, ein klar lösliches, trennbeständiges Inhibitormittel zu erhalten, wenn man das an sich unerwünschte Cyclohexylamin durch Cumolsulfonat oder einen Biodispergator ersetzt, sofern noch ein Alkanolamin zugegen ist.

Der oben genannte Biodispergator ist eine Substanz, die den Angriff von Konservierungsmitteln auf die Ansiedlung etwaiger Biofilme erleichtert. Bewährt hat sich insbesondere das Produkt AKYPO®RO 50 VG (Kao Chemicals GmbH.), eine Verbindung der Formel

R-O-(CH₂CH₂O-)₅-CH₂COOH (R = C₁₆/C₁₈-Alkyl).

Diese Verbindung wird den obigen Inhibitormitteln in Mengen von 0 bis 1000 mg/l zugegeben, vorzugsweise in einer Menge von 2-10 mg/l bei Inhibitoren zur Konditionierung von Kesselspeisewasser für Dampferzeugung mit entmineralisiertem Wasser, von 10-50 mg/l zur Konditionierung von Kesselspeisewasser für Dampferzeugung mit nur teilenthärtetem Wasser und für Heisswasserkreisläufe, von 20-50 mg/l für Kühlkreisläufe, und von 300-1000 mg/l zum Auskochen neuer und stillgelegter (reparierter) Kessel vor der Inbetriebnahme.

PASP ist im Gegensatz zu Polyacrylsäure und deren Copolymeren biologisch leicht abbaubar, was insbesondere bei der Anwendung in Inhibitormitteln zum Auskochen neuer Kessel ein grosser Vorteil ist, weil das Auskochwasser nun direkt in den Vorfluter von Kläranlagen abgelassen werden kann. Andererseits ist es nun angezeigt, die erfindungsgemässen Inhibitormittel gegen biologische Zersetzung zu konservieren. Solche Massnahmen waren bisher auch schon üblich und sind dem Fachmann bekannt. Am besten wird der Zusatz von Konservierungsmitteln wie Wasserstoffperoxid, anderen sauerstoffabspaltenden Mitteln, oder Chlor bzw. unterchlorige Säure liefernden Substanzen vor Ort direkt ins Speisewasser eingegeben.

Zum Nachweis der überraschend bedeutend besseren Stabilität von Fettpolyamin-Polyasparaginsäure-Mischungen gegenüber Mischungen von Fettpolyamin mit anderen Polycarbonsäuren wurden Gemische aus 2 g Fettpolyamin, 3 g Cyclohexylamin, 10 g Monoethanolamin und 10 g PASP-Natriumsalz, 50%ig in Wasser bzw. 10 g Natriumpolyacrylat, ebenfalls 50%ig in Wasser, vermischt und die Mischung unter Schütteln mit Wasser auf 200 ml aufgefüllt. Während die Probe mit dem Natriumpolyacrylat eine in weniger als einer Minute aufrahmende, sich völlig in zwei Phasen trennende Emulsion lieferte, ergab die Probe mit PASP-Natriumsalz eine noch nach Wochen stabile, gelbliche, leicht opake homogene Mischung.

Die eben genannten Mischungen wurden auch zur Bestimmung der kesselsteinverhütenden Wirkung der erfindungsgemässen Inhibitormittel verwendet

### Beispiel 7: Kesselstein-Inhibierung

Die Versuchsanordnung ist in der Veröffentlichung EP-B1-0'184'558 beschrieben.

Zu 2 l Leitungswasser mit einer Härte von 15°d gibt man unter magnetischem Rühren 10 ml einer Lösung von 117,2 g/l CaCl₂.6H₂O und 10 ml einer Lösung von 44,0 g/l MgSO₄.7H₂O, danach 0,4 ml (entsprechend 200 ppm) einer der obigen Mischungen. Dann gibt man noch 20 ml einer Lösung von 84 g/l NaHCO₃ zu. Die so erhaltene Flüssigkeit wird mit einer Mengengeschwindigkeit von 4 ml/min durch eine Edelstahlkapillare mit 250 µm Innendurchmesser gepumpt, die im Wasserbad auf 99°C gehalten wird. Die Kapillare setzt sich nach und nach mit Kesselstein zu. Wenn am Eingang der Kapillare ein Druck von 2 MPa erreicht ist, schaltet die Pumpe automatisch ab, und es wird die Menge der durchgeflossenen Flüssigkeit bestimmt (die um so kleiner ist, je weniger wirksam das Antikesselsteinmittel ist). Es wurden jeweils drei Durchläufe ausgeführt.

Es wurden die folgenden Ergebnisse gefunden:

| Wasser ohne Zusatz (Blindprobe) | Vergleich mit PAC | erfindungsgemäss mit PASP |
|---|---|---|
| 30/29/28 ml | 60/45/40 ml | 380/315/260 ml |

Daraus geht die überragende kesselsteinverhütende Wirkung des neuen Inhibitormittels klar hervor.

Im folgenden Beispiel 8 ist das Korrosionsverhalten dieser Inhibitormittel untersucht worden.

### Beispiel 8: Korrosions-Inhibierung

Eisenblechabschnitte wurden 1 Woche lang bei 25°C in die oben angegebene kesselsteinverursachende Lösung eingehängt, welche 200 ppm eines Inhibitormittels enthielt. Danach wurde der Gehalt der Lösung an gelöstem Eisen gravimetrisch und titrimetrisch bestimmt. Es wurden die folgenden Ergebnisse erhalten:

| Zusatz | Eisen (mg/l) |
|---|---|
| Blindprobe (kein Zusatz) | 65 |
| Polyacrylsäure, Na-Salz (Coatex TE 949), 50 Gew.-% in Wasser | 28 |
| Polyacrylat-Copolymer, Na-Salz (Coatex 146-50), 50 Gew.-% in Wasser | 19 |
| PASP, 50 Gew.-% in Wasser | 1,6 |
| Mittel nach Beispiel 1, aber mit PAC /Coatex TE 949) anstelle PASP (Stand der Technik) | 6 |
| Mittel nach Beispiel 2 | 1,3 |

Hier zeigt sich, dass die erfindungsgemässen Inhibitormittel auch einen ausgezeichneten Korrosionsschutz bieten, und dies bedeutet, dass die gegenüber dem Stand der Technik bessere Kesselsteininhibierung nicht etwa durch eine höhere Korrosion erkauft wird, wie dies bei manchen handelsüblichen Inhibitormitteln beobachtet wurde.

Die erfindungsgemässen Inhibitormittel können als solche, d.h. mit demjenigen Wassergehalt verwendet werden, der durch die Herstellung gegeben ist, weil die PASP (und auch die Polyacrylsäure) als wässrige, im allgemeinen 40 oder 50 gew.-%ige Lösung handelsüblich sind. Im Sinne einer verbesserten Stabilität der Inhibitormittel werden diese bevorzugt weiter mit Wasser verdünnt formuliert und enthalten dann im allgemeinen etwa 10 bis 30 Gew.-% an Wirkstoffen, bevorzugt und im einzelnen 1-3 Gew.-% an Fettpolyamin und 5-15 Gew.-% an PASP.

Die dosierte Zugabe zum Wasser erfolgt nach bekannten Methoden. Die Menge an eindosiertem Zusatz liegt wie bei den Inhibitormitteln des Standes der Technik zwischen 1 und 200 ppm und beträgt beispielsweise bei Kesselspeisewasser und Heisswasserkreisläufen 2 bis 12 ppm, in Kühlwasserkreisläufen 2 bis 20 ppm und in Wasser zum Auskochen 15 bis 150 ppm, angegeben als Konzentration im Wasser nach dem Einspeisen. Dabei bezieht sich die Angabe von ppm auf das Gewicht.

Noch vorteilhafter ist die Anwendung der neuen Inhibitormittel nach dem nachstehend beschriebenen erfindungsgemässen Verfahren:

Die vorliegende Erfindung betrifft weiterhin ein Verfahren zur Inhibierung von Kesselsteinablagerungen und von korrosiven Angriffen auf metallische Apparateteile in Anlagen zur Dampferzeugung und in Brauchwasserkreisläufen durch Zusatz mindestens eines Inhibitormittels zum Speisewasser bzw. Kreislaufwasser. Dieses Verfahren ist im zweiten unabhängigen Patentanspruch definiert, wobei abhängige Ansprüche besondere Ausführungsformen zum Inhalt haben.

Beim Zusatz von Mitteln zur Inhibierung von Kesselstein und Korrosion der oben beschriebenen Art ist eine richtige Dosierung wichtig. Eine laufende Zugabe des oder der Mittel ist vorteilhaft, um Schwankungen der Konzentration des Mittels im Wasser zu vermindern, und die laufende Zugabe beruht darauf, dass sich das Inhibitormittel bei seiner Tätigkeit laufend zersetzt oder anderweitig verbraucht wird.

Zunächst liegt auf der Hand, dass eine zu geringe Dosierung zu unbefriedigenden technischen Ergebnissen führt, während eine zu hohe, überschüssige Zugabe wirtschaftlich unsinnig ist. Darüber hinaus wurde jedoch beobachtet, dass bei zu hoher Zugabe Ablagerungen insbesondere des Fettamins an bestimmten Apparateteilen auftreten, die zu Verstopfungen und anderen Störungen in der Anlage führen können.

Die Erfindung sieht nun vor, dass bei denjenigen Anwendungen, bei denen das Brauchwasser im Kreislauf geführt wird, die Konzentration mindestens einer Komponente des zugesetzten Inhibitormittels im Kreislauf überwacht und eine Nachdosierung des Inhibitormittels in Abhängigkeit von der gefundenen Konzentration gesteuert wird.

Dabei kann als Sollwert der Konzentration entweder das Verschwinden der gemessenen Komponente(n) oder ein festzulegender Konzentrationswert gewählt werden.

Auf diese Weise wird sowohl eine schädliche Überdosierung als auch eine ungünstige Unterdosierung des Inhibitormittels vermieden.

Als zu messende Komponente des Mittels wird mit Vorteil das Fettpolyamin gewählt, da es einerseits eine kritische Substanz im Sinne von nachteiligen Beeinflussungen von Apparateteilen darstellt und andererseits Techniken bekannt geworden sind, beispielsweise nach einem patentierten Vorschlag der Anmelderin, um Fettpolyamine noch im ppb-Bereich (ppb = parts per billion oder Teile pro 1 Milliarde Teile) in Wasserproben schnell zu bestimmen, nämlich kolorimetrisch. Selbstverständlich ist es mit den heutigen elektronischen Mitteln möglich, die Werte der Konzentrationsanalyse zur Steuerung der Dosierung des Inhibitormittels zu benutzen, so dass ein vollautomatisch arbeitendes Verfahren resultiert.

Im Vorstehenden sind die neuen Inhibitormittel und das erfindungsgemässe Verfahren an Beispielen erläutert worden. Diese Beschreibung schränkt den Schutzbereich der Erfindung nicht ein. Abweichungen in der Zusammensetzung der oben beschriebenen erfindungsgemässen Inhibitormittel oder bei der Ausführung des erfindungsgemässen Verfahrens, die im Wissen und Können des Fachmanns liegen, werden von der vorliegenden Erfindung ohne weiteres umfasst. Dies betrifft beispielsweise weitere, hier nicht erwähnte Zusätze zu den beschriebenen Inhibitormitteln.

## Patentansprüche

**1.** Mittel gegen das Auftreten von Ausscheidungen aus Prozesswässern und gegen das Verursachen von Metallkorrosion durch diese Prozesswässer, wobei das Mittel eine Polycarbonsäurekomponente und ein Fettpolyamin enthält, **dadurch gekennzeichnet, dass** die Polycarbonsäurekomponente mindestens zum überwiegenden Teil aus einer Polyasparaginsäure der Formel 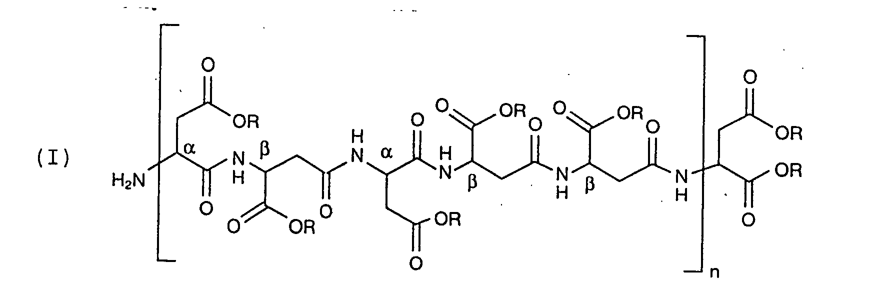 oder ihren Salzen besteht, worin R für Wasserstoff oder ein salzbildendes Kation steht und n einen solchen Wert aufweist, dass die Verbindung eine Molmasse zwischen 1500 und 3000 aufweist.

**2.** Mittel nach Anspruch 1, **dadurch gekennzeichnet, dass** es als wässrige Zubereitung vorliegt.

**3.** Mittel nach Anspruch 1, **dadurch gekennzeichnet, dass** das Fettpolyamin eine Substanz der Formel
(III) R-[NH-(CH₂)ₘ-]ₙ-NH₂
ist, worin R für einen aliphatischen Rest mit 12 bis 18 C-Atomen, m für eine ganze Zahl von 2 bis 8, bevorzugt für 3, und n für eine ganze Zahl von 1 bis 6 steht.

**4.** Mittel nach einem der vorstehenden Ansprüche, **dadurch gekennzeichnet, dass** es weiterhin einen löslichkeitsverbessernden Zusatz enthält, nämlich mindestens eine Verbindung ausgewählt aus Cumolsulfonsäure und deren Salzen, Cyclohexylamin und einem Niederalkanolamin.

**5.** Mittel nach Anspruch 4, **dadurch gekennzeichnet, dass** es frei von Cyclohexylamin ist.

**6.** Mittel nach Anspruch 5, **dadurch gekennzeichnet, dass** es als löslichkeitsverbessernden Zusatz gleiche Teile an Monoethanolamin und Cumolsulfonat enthält.

**7.** Mittel nach einem oder mehreren der vorstehenden Ansprüche, **dadurch gekennzeichnet, dass** es die genannte Polyasparaginsäure oder deren Salz als alleinige Polycarbonsäurekomponente enthält.

**8.** Mittel nach Anspruch 3 **dadurch gekennzeichnet, dass** das genannte Fettpolyamin als gereinigte Substanz vorliegt.

**9.** Mittel nach einem oder mehreren der vorstehenden Ansprüche, **dadurch gekennzeichnet, dass** das Gewichtsverhältnis zwischen dem genannten Fettpolyamin und der genannten Polyasparaginsäure oder ihrem Salz im Bereich von 1:1 und 1:15, vorzugsweise von 1:2 bis 1:7,5 liegt.

**10.** Mittel nach einem oder mehreren der vorstehenden Ansprüche, **dadurch gekennzeichnet, dass** es weiterhin ein Konservierungsmittel enthält.

**12.** Mittel nach Anspruch 10, **dadurch gekennzeichnet, dass** es weiterhin einen Biodispergator zur Erleichterung des Angriffs von Konservierungsmitteln auf die Ansiedlung etwaiger Biofilme enthält.

**13.** Mittel nach Anspruch 11, **dadurch gekennzeichnet, dass** der Biodispergator eine Verbindung der Formel
R-O-(CH₂CH₂O-)₅-CH₂COOH
ist, worin R für einen Alkylrest mit 16 oder 18 C-Atomen steht.

**14.** Verfahren zur Inhibierung von Kesselsteinablagerungen und von korrosiven Angriffen auf metallische Apparateteile in Anlagen zur Dampferzeugung und in Brauchwasserkreisläufen durch Zusatz mindestens eines Inhibitormittels zum Speisewasser bzw. Kreislaufwasser, **dadurch gekennzeichnet, dass** dem Brauchwasser ein Mittel zugesetzt wird, das eine Polycarbonsäurekomponente und ein Fettpolyamin enthält, und dass die Polycarbonsäurekomponente mindestens zum überwiegenden Teil aus einer Polyasparaginsäure der Formel 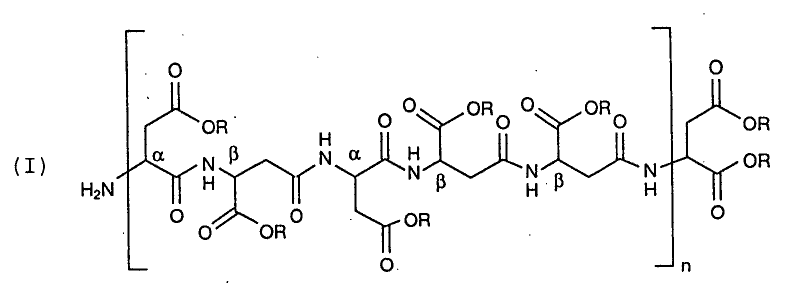 oder ihren Salzen besteht, worin R für Wasserstoff oder ein salzbildendes Kation steht und n einen solchen Wert aufweist, dass die Verbindung eine Molmässe zwischen 1500 und 3000 aufweist.

**15.** Verfahren nach Anspruch 14, **dadurch gekennzeichnet, dass** das Brauchwasser zum Auskochen einer und das genannte Mittel einmalig oder absatzweise zugegeben wird.

**16.** Verfahren nach Anspruch 14, **dadurch gekennzeichnet, dass** das Brauchwasser zum Umlauf in einem Heiz- oder Kühlkreislauf oder als Speisewasser einer Dampfkesselanlage eingesetzt und das genannte Mittel kontinuierlich zugegeben wird.

**17.** Verfahren nach Anspruch 16, **dadurch gekennzeichnet, dass** kontinuierlich soviel am genannten Mittel zugegeben wird, dass eine Konzentration im Brauchwasser von 1 und 200 ppm aufrechterhalten wird.

**18.** Verfahren nach Anspruch 16, **dadurch gekennzeichnet, dass** kontinuierlich soviel am genannten Mittel zugegeben wird, dass bei Kesselspeisewasser und Heisswasserkreisläufen eine Konzentration von 2 bis 12 ppm und in Kühlwasserkreisläufen von 2 bis 20 ppm aufrechterhalten wird.

**19.** Verfahren nach Anspruch 14, **dadurch gekennzeichnet, dass** bei denjenigen Anwendungen, bei denen das Brauchwasser im Kreislauf geführt wird, die Konzentration mindestens einer Komponente des zugesetzten Inhibitormittels im Kreislauf überwacht und eine Nachdosierung des Inhibitormittels in Abhängigkeit von der gefundenen Konzentration gesteuert wird.

**20.** Verfahren nach Anspruch 14, **dadurch gekennzeichnet, dass** die überwachte Komponente des Mittels das genannte Fettpolyamin ist.

**21.** Verwendung von Polyasparaginsäure der Formel 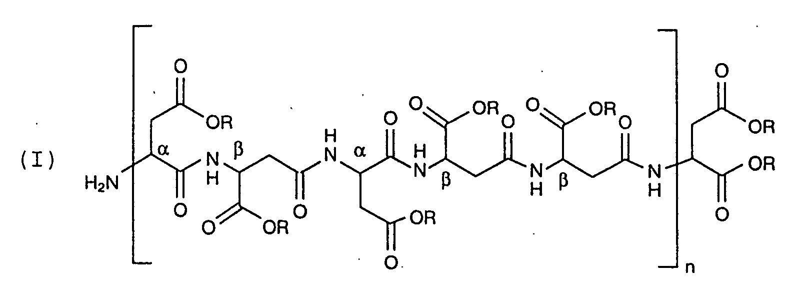 oder ihren Salzen, worin R für Wasserstoff oder ein salzbildendes Kation steht und n einen solchen Wert aufweist, dass die Verbindung eine Molmasse zwischen 1500 und 3000 aufweist, zusammen mindestens mit einem Fettpolyamin der Formel
(III) R-[NH-(CH₂)ₘ-]ₙ-NH₂
worin R für einen aliphatischen Rest mit 12 bis 18 C-Atomen, m für eine ganze Zahl von 2 bis 8, bevorzugt für 3, und n für eine ganze Zahl von 1 bis 6 steht, als Zusatz zu Prozesswässern zwecks Kesselstein- und Korrosionsverhinderung in Vorrichtungen, in denen Brauchwasser umläuft und/oder erhitzt wird.

**22.** Verwendung nach Anspruch 21 zusammen mit mindestens einer löslichkeitsverbessernden Verbindung, ausgewählt aus Niederalkanolaminen und Cumolsulfonsäure und ihren Salzen.
